# EUROPÄISCHE PATENTSCHRIFT

(11) **EP 1 083 340 B1**
(45) Veröffentlichungstag und Bekanntmachung des Hinweises auf die Patenterteilung: **21.12.2005**
(21) Anmeldenummer: 00119716.9
(22) Anmeldetag: 09.09.2000
(51) Int. Cl.: F16B 5/12, F16B 5/06, F16B 2/24

(54) **Federelement**
Spring element
Elément de ressort

(30) Priorität: 11.09.1999 DE 19943602
(43) Veröffentlichungstag der Anmeldung: 14.03.2001
(73) Patentinhaber: ROBERT BOSCH GMBH, 70442 Stuttgart (DE)
(72) Erfinder: Koban, Johannes, 70178 Stuttgart (DE); Klemd, Olaf, 71706 Markgroeningen (DE)

(56) Entgegenhaltungen:
- WO-A-99/41508
- DE-A- 2 651 897
- GB-A- 2 194 014
- US-A- 3 999 356

## Beschreibung

### Stand der Technik

Die Erfindung geht aus von einem Federelement nach dem Oberbegriff des Hauptanspruchs.

Ein derartiges beispielsweise aus dem DE-GM 91 10 357.6 bekanntes Federelement dient der Befestigung eines Flächenelements in einer Aufnahmenut. Das Federelement weist einen Abschnitt auf, der mit einer Nutwand zusammenwirkt und der eine Zunge mit einem schräg abstehenden Teilabschnitt zur Beaufschlagung des Flächenelements aufweist. Das Flächenelement wird dadurch gegen die der Nutwand mit dem Abschnitt gegenüberliegende Nutwand gedrückt.

Zur Montage wird zunächst das Federelement in die Aufnahmenut eingelegt. Ist die Aufnahmenut breiter als das Flächenelement, kann das Federelement in der Aufnahmenut verrutschen, wodurch sich das Flächenelement nicht in die Aufnahmenut einführen läßt. Die Montage ist bei diesem Flächenelement jedoch zumindest etwas umständlich durchzuführen.

Wird das Flächenelement mit einer entsprechenden Kraft beaufschlagt, so ist es nur zu der Seite mit dem Federelement abgefedert. Fällt diese Kraft schlagartig weg, so prallt das Flächenelement an die Nutwand zurück, an die es zuvor durch das Federelement gedrückt wurde, wodurch ein störendes Geräusch entstehen kann.

Ferner liegt zwischen dem Flächenelement und der Zunge des Federelements nur eine Linienberührung vor. Somit ist die Befestigung nicht bei allen möglichen Dicken der Flächenelemente besonders stabil.

Schließlich ist an dem Abschnitt ein Schenkel angeformt, der am Nutgrund anliegt und die Breite des Nutgrunds aufweist. Dadurch kann das Federelement erst ab einer bestimmten Mindestbreite der Aufnahmenut verwendet werden.

Aus der DE 197 51 167 C1 ist ein Profilstab bekannt, der Aufnahmenuten für Flächenelemente aufweist. Die Aufnahmenuten sind so ausgebildet, daß die Flächenelemente ohne zusätzliche Befestigungsteile direkt und sicher mit dem Profilstab verbunden werden können. Dies erfolgt durch eine besondere Ausbildung der Aufnahmenut, die eine klemmende Fixierung des flächigen Elements in der Aufnahmenut über eine relativ große Klemmfläche ermöglicht. Durch Erhebungen, die beim Herausziehen des flächigen Elements als Widerhaken wirken, erfolgt eine zusätzliche Vergrößerung der Haltekraft.

Aus der DE 26 51 897 A1 ist eine Steckklammer zum Befestigen von Kantenschutzprofilen bekannt. Der Klammerkörper besteht im wesentlichen aus zwei U- oder V-förmig angeordneten Seitenwänden, an die sich nach innen gerichtete Klemmzungen mit Klemmkanten anschließen. Bedingt durch die ungünstige Winkelstellung der Klemmzungen kann es beim Herausziehen der Trägerkante aufgrund von Selbsthemmung zu einem Blockieren kommen.

Das in der GB 2 194 014 A offenbarte Befestigungselement ist mit Widerhaken ausgestattet, die als Krallen wirken und sich in das Material der zu befestigenden Platte eingraben können. Die vorwiegend formschlüssige Verbindung weist neben der Beschädigung des Flächenelements außerdem den Nachteil auf, dass die Verwendung unterschiedlich dicker Platten eingeschränkt ist.

Demgegenüber besteht die Aufgabe der Erfindung darin, eine Befestigung eines Flächenelements in einer Aufnahmenut mit mindestens einem Federelement zu schaffen, durch die eine stabile Befestigung unterschiedlich dicker Flächenelemente bei einfacher Montage möglich ist. Erfindungsgemäß wird diese Aufgabe durch die Merkmale des Anspruchs 1 gelöst.

### Vorteile der Erfindung

Das erfindungsgemäße Federelement mit den kennzeichnenden Merkmalen des Hauptanspruchs hat demgegenüber den Vorteil, daß zumindest bei einigen Flächenelementen eine Flächenberührung vorliegt. Dadurch ergibt sich eine bessere Stabilität, insbesondere bei Wellengittern.

Ein Flächenelement läßt sich wieder leicht aus der Aufnahmenut entfernen, wenn sich an die im wesentlichen parallel verlaufenden Teilabschnitte der Zungen schräg voneinander weggerichtete Teilabschnitte anschließen. Dadurch können sich die Kanten der Zungen nicht an dem Flächenelement verkrallen.

Der Abstand der Zungen beträgt ungefähr ein Drittel bis ein Sechstel des Abstands der Abschnitte. Dadurch können Flächenelemente mit einer großen Variation der Dicke sicher eingeklemmt werden.

Es ist zweckmäßig, daß mindestens zwei, vorzugsweise drei Bügel vorgesehen sind, über die die sich gegenüberliegenden Abschnitte miteinander verbunden sind und zwischen denen die Zungen angeordnet sind.

Wenn die Abschnitte an den von den Bügeln abgewandten Bereichen Teilabschnitte aufweisen, die schräg voneinander weggerichtet sind, so hält das Federelement sicher in der Aufnahmenut. Greifen diese Teilabschnitte in sägezahnförmige Vertiefungen der Nutwände, so ist der Halt nochmals verbessert.

Dadurch, daß die Abschnitte und die Zungen des Federelementes im wesentlichen symmetrisch zu einer durch das Federelement verlaufenden Symmetrieebene ausgebildet sind, ist die Montage vereinfacht. Außerdem läßt sich das Flächenelement gut in der Aufnahmenut zentrieren.

Das Federelement läßt sich für einen größeren Bereich an unterschiedlich breiten Aufnahmenuten sowie an unterschiedlich dicken Flächenelementen verwenden, wenn der oder die Bügel gebogen sind und vorzugsweise eine V-Form haben, die aus dem Federelement heraus- oder in das Federelement hineinragt. Zum einen läßt sich das Federelement leicht zusammendrücken, wenn es in relativ enge Aufnahmenuten eingeführt werden soll. Bei verhältnismäßig dicken Flächenelementen, läßt es sich leicht aufweiten.

Weitere Vorteile und vorteilhafte Weiterbildungen des erfindungsgemäßen Federelements ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert. Es zeigen:
- Figur 1: eine Federelement mit einem Flächenelement in einem Profilstab montiert,
- Figur 2: eine Seitenansicht des Federelements nach Figur 1,
- Figur 3: eine Stirnansicht eines ersten abgewandelten Federelements,
- Figur 4: eine Stirnansicht eines zweiten abgewandelten Federelements,
- Figur 5: eine Stirnansicht eines dritten abgewandelten Federelements,
- Figur 6: eine Stirnansicht eines vierten abgewandelten Federelements und
- Figur 7: eine Seitenansicht des vierten abgewandelten Federelements.

### Beschreibung des Ausführungsbeispiels

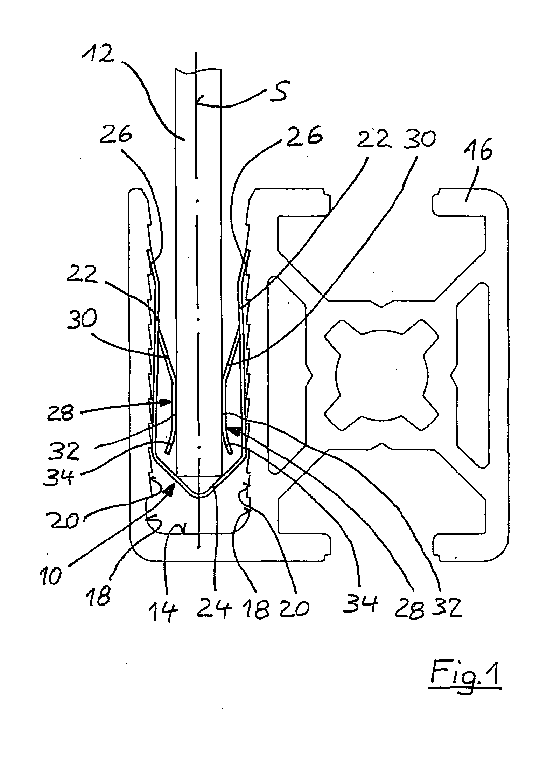

In der Figur 1 ist ein Federelement 10 zur Befestigung eines Flächenelements 12 in einer Aufnahmenut 14 eines Profilstabs 16 gezeigt. Bei dem Flächenelement 12 kann es sich zum Beispiel um ein Wellengitter oder eine Kunststoffscheibe handeln. Mit vier Profilstäben 16 wird ein nicht dargestellter Rahmen aufgebaut, in den das Flächenelement 12 eingespannt wird. Statt des Profilstabs 16 kann es sich auch um ein anderes Bauteil mit einer Aufnahmenut 14 handeln.

Die Aufnahmenut 14 des im Aluminium-Strangpreßverfahren hergestellten Profilstabs 16 verläuft in dessen Längsrichtung und entspricht in ihrer Tiefe nahezu der entsprechenden Höhe des Profilstabs 16. An den Nutwänden 18 der Aufnahmenut 14 sind sägezahnförmige Vertiefungen 20 ausgebildet. Alternativ können die Nutwände 18 der Aufnahmenut 14 auch glatt ausgebildet sein.

Das Federelement 10 erstreckt sich mit seiner Längsrichtung zumindest teilweise in Längsrichtung des Profilstabs 16 und ist als Klammer ausgebildet, die das Flächenelement 12 am Randbereich umgreift. Zwei Abschnitte 22 des Federelements 10 wirken mit den beiden sich gegenüberliegenden Nutwänden 18 zusammen, indem die Abschnitte 22 zumindest teilweise an den Nutwänden 18 anliegen. Die Breite des Federelements 10 ist etwas breiter als die Breite der Aufnahmenut 14, wodurch das Federelement 10 durch die Abschnitte 22 in der Aufnahmenut 14 zentriert wird. Die Abschnitte 22 des unmontierten Federelements 10 verlaufen im wesentlichen parallel zueinander. Durch die Montage in der engen Aufnahmenut 14 sind sie etwas schräg geneigt.

Die Abschnitte 22 sind über mindestens einen zum Nutgrund der Aufnahmenut 14 ausrichtbaren Bügel 24 miteinander verbunden. Der Bügel 24 hat im vorliegenden Ausführungsbeispiel eine V-Form, wobei die Spitze aus dem Federelement 10 herausragt und zum Nutgrund der Aufnahmenut 14 weist. Alternativ ist auch ein ebener Bügel 24 möglich. Jedoch kann das Federelement 10 durch die V-Form oder eine runde Form des Bügels 24 beim Einführen in eine Aufnahmenut 14, die schmaler als die Breite des Federelements 10 ist, einerseits leicht zusammengepreßt und eingeführt werden; andererseits läßt es sich bei der Befestigung an einem relativ dicken Flächenelement 12 leicht aufweiten. Hierbei ist vorausgesetzt, daß die Dicke des Flächenelements 12 nicht größer als die Breite der Aufnahmenut 14 ist.

An den vom mindestens einen Bügel 24 abgewandten Bereichen weisen die Abschnitte 22 Teilabschnitte 26 auf, die schräg voneinander weggerichtet sind. Die Teilabschnitte 26 greifen in die sägezahnförmige Vertiefungen 20 der Nutwände 18. Dadurch ist eine sehr stabile Befestigung des Federelements 10 in der Aufnahmenut 14 gewährleistet. Aber auch bei glatten Nutwänden 18 ist durch diese Ausbildung eine recht stabile Befestigung gegeben.

Jeder der beiden Abschnitte 22, die mit den Nutwänden 18 zusammenwirken, weist wenigsten eine Zunge 28 auf, die das Flächenelement 12 zur Befestigung beaufschlagen. Alternativ können ein oder mehrere Abschnitte 22 das Flächenelement 12 beaufschlagen und eine oder mehrere Zungen 28 mit den Nutwänden 18 zusammenwirken. Es ist auch möglich, daß nur an einem Abschnitt 22 eine Zunge 28 ausgebildet ist. Die Ausbildung an beiden Abschnitten 22 hat jedoch zur Folge, daß das Flächenelement 12 in der Nut 14 zentriert wird. Die Abschnitte 22 und die Zungen 28 des Federelements 10 sind hierzu im wesentlichen symmetrisch zu einer durch das Federelement 10 verlaufenden Symmetrieebene S ausgebildet. Diese Symmetrieebene S verläuft ebenfalls durch die Aufnahmenut 14.

Die Zungen 28 weisen einen schräg abstehenden Teilabschnitt 30 auf, so daß die Teilabschnitte 30 der beiden sich gegenüberliegenden Zungen 28 zum Bügel 24 hin schräg aufeinander zulaufen. Dadurch ergibt sich eine in Richtung des Nutgrunds der Aufnahmenut 14 verengende Aufnahme, in der Flächenelemente 12 verschiedener Dicken sicher befestigt werden können. An die schrägen Teilabschnitte 30 der Zungen 28 schließen sich Teilabschnitte 32 an, die im wesentlichen parallel zueinander verlaufen und etwa die gleiche Länge wie die schrägen Teilabschnitte 30 aufweisen. Dadurch ist in vorteilhafter Weise für Flächenelemente 12 bestimmter Dicken eine Flächenpressung gegeben.

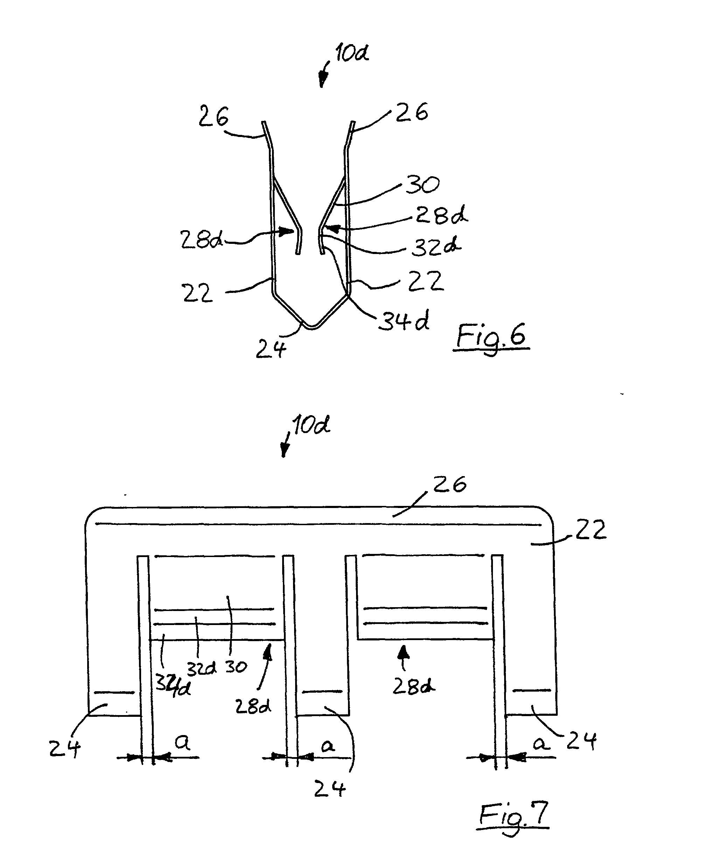

An die im wesentlichen parallel verlaufenden Teilabschnitte 32 der Zungen 28 wiederum schließen sich schräg voneinander weggerichtete Teilabschnitte 34 an, die kürzer sind als die parallelen Teilabschnitte 32. Die schrägen Teilabschnitte 34 haben zur Folge, daß das Entfernen des Federelements 10 vom Flächenelement 12 vereinfacht ist, da sich keine Kanten der Zungen 28 in dem Flächenelement 12 verkeilen können. Der Abstand a_{Z} der Zungen 28 zueinander beträgt ungefähr ein Drittel bis ein Sechstel des Abstands a_{A} der Abschnitte 22 (Figur 3). Dadurch ist eine sichere Befestigung für Flächenelemente 12 verschiedener Dicken gegeben.

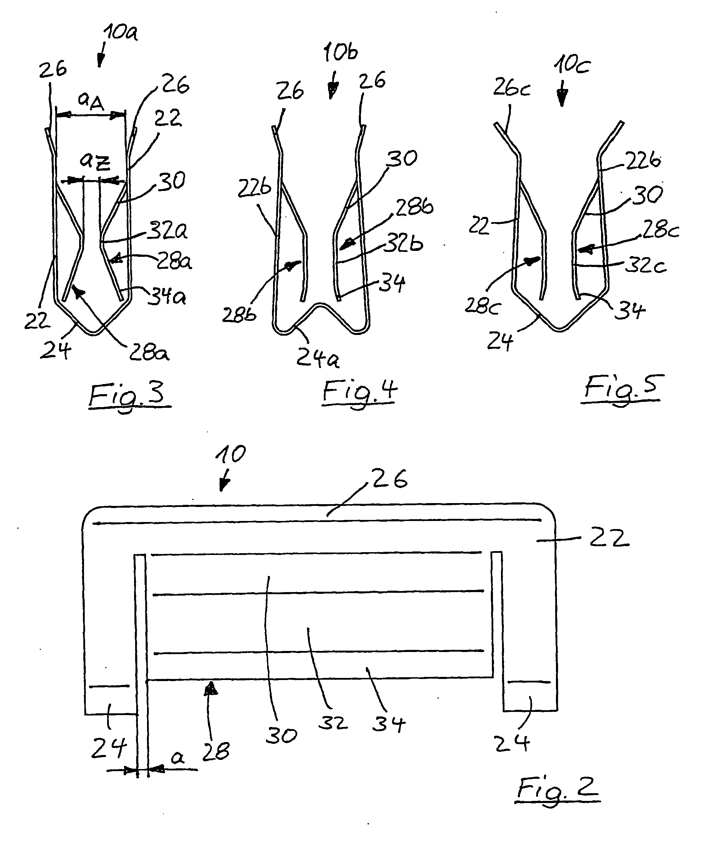

Aus der Figur 2 geht hervor, daß an dem Federelement 10 zwei Bügel 24 vorgesehen sind, die in Längsrichtung an den Endbereichen des Federelements 10 ausgebildet sind und zwischen denen die Zungen 28 angeordnet sind. Zwischen den Bügeln 24 und den Zungen 28 ist in Längsrichtung des Federelements 10 ein Abstand a für den Eingriff eines Stanzwerkzeugs vorgesehen.

Das Federelement 10 ist aus Federblech hergestellt. Es kann jedoch auch ein anderes elastisches Material wie zum Beispiel Kunststoff vorgesehen sein, solange die Festigkeit ausreicht. Zunächst wird aus einem ebenen rechteckigen Federblechteil ein H-förmiger Bereich ausgestanzt. Die parallelen H-Schenkel trennen die Zungen 28 aus den Abschnitten 22 heraus und von den Bügeln 24 ab. Der Querschenkel trennt die Zungen 28 voneinander. Dann werden die Zungen 28 gebogen, die nach diesem Vorgang schon ihre Form und Lage bezüglich des jeweiligen Abschnitts 22 haben. Schließlich wird der Bügel 24 gebogen, wodurch das Federelement 10 seine im wesentlichen U-förmige Klammerform erhält.

Bei der Montage werden ausreichend viele Federelemente 10 an den Kanten bzw. Randbereichen des Flächenelements 12 angeordnet. Die Federelemente 10 sind hierbei zumindest durch einen Kraftschluß sicher an dem Flächenelement 12 befestigt. Danach wird das Flächenelement 12 mit den Kanten und den daran befestigten Federelementen 10 voran durch die Nuthälse in die Aufnahmenuten 14 der Profilstäbe 16 geschoben. Durch den V-förmigen Bügel 24 ist ein einfaches Einführen auch bei engeren Aufnahmenuten 14 möglich. Nacheinander werden alle Profilstäbe 16 an dem Flächenelement 12 angebracht und mittels Verbindungselemente miteinander zu einem Rahmen verbunden.

In der Figur 3 ist ein gegenüber dem Federelement 10 abgewandeltes Federelement 10a gezeigt. Gleiche Bezugszeichen beziehen sich auf die gleichen Teile wie beim Federelement 10. Im Gegensatz zum Federelement 10 weisen die Zungen 28a parallele Teilabschnitte 32a auf, die kürzer sind als die schräg aufeinander zulaufenden Teilabschnitte 30. Die schräg voneinander weggerichteten Teilabschnitte 34a haben ungefähr die gleiche Länge wie die Teilabschnitte 30. Überschreitet die Breite des Flächenelements 12 eine gewisse Größe, werden somit auch die Teilabschnitte 34a gegen die Nutwände 18 gedrückt. Dadurch wird auf das Flächenelement 12 eine größere Federkraft ausgeübt.

Aus der Figur 4 geht ein gegenüber dem Federelement 10 leicht abgewandeltes Federelement 10b hervor. Gleiche Bezugszeichen beziehen sich wieder auf die gleichen Teile. Im Gegensatz zum Federelement 10 weisen die Zungen 28b des Federelements 10b parallele Teilabschnitte 32b auf, die länger sind als die parallelen Teilabschnitte 32 des Federelements 10. Dadurch ergeben sich größere Auflageflächen für das Flächenelement 12, was insbesondere bei Wellengittern vorteilhaft ist.

Der mindestens eine Bügel 24b hat eine V-Form, die mit ihrer Spitze in das Federelement 10b hineingerichtet ist. Dadurch ist ein Flächenelement 12 besser in einem aus Profilstäben 16 gebildeten Rahmen fixiert. Der Bügel 24b biegt sich nach der Montage nach außen und mit seinen äußeren, gekrümmten Bereichen gegen die Nutwände 18. Dadurch stützt sich das Federelement 10b besser an den Nutwänden 18 ab, wodurch sich die auf das Flächenelement 12 wirkende Federkraft erhöht. Es gelten jedoch auch die Vorteile des Bügels 24 bezüglich des Aufweitens bei dicken Flächenelementen 12 und des Zusammenpressens bei engen Aufnahmenuten 14.

Die Abschnitte 22b verlaufen ausgehend vom Bügel 24a schräg aufeinander zu. Dadurch klammert sich das Federelement 10b bei der Befestigung stärker an das Flächenelement 12, was die Montage dünnerer Flächenelemente 12 erleichtern kann.

In der Figur 5 ist ein Federelement 10c gezeigt, dessen Abschnitte 22c so wie beim Federelement 10b ebenfalls schräg aufeinander zulaufen, wobei die Teilabschnitte 26c stärker voneinander wegweisen, wie bei den Federelementen 10, 10a, 10b. Dadurch drückt das Federelement 10c, nachdem es in die Aufnahmenut 14 eingeführt wurde, stärker auf das Flächenelement 12, wodurch ein besserer Halt gegeben ist. Die Zungen 28c sind ebenfalls wie beim Federelement 10b ausgebildet.

In der Figur 6 ist ein Federelement 10d gezeigt, dessen Abschnitte 22 im unmontierten Zustand wie beim Federelement 10 parallel zueinander verlaufen. Die parallelen Teilabschnitte 32d der Zungen 28d und die schräg voneinander weglaufenden Teilabschnitte 34d sind ungefähr gleich lang wie die Teilabschnitte 32d und kürzer als die Teilabschnitte 30.

In der Figur 7 ist eine Seitenansicht des Federelements 10d gezeigt. In Längsrichtung des Federelements 10d sind an dessen beiden Endbereichen und in der Mitte Bügel 24 vorgesehen. Zwischen den drei Bügeln 24 sind an jedem Abschnitt 22 zwei Zungen 28d vorgesehen. Es ist auch möglich, daß nur ein Bügel 24 zwischen den Zungen 28d vorgesehen ist. Durch die drei Bügel 24 ist jedoch die Haltekraft an dem Flächenelement 12 gegenüber zwei Bügeln 24 erhöht, was vorteilhaft bei der Montage ist.

## Patentansprüche

1. Als Klammer ausgebildetes Federelement (10, 10a, 10b, 10c, 10d) zur Befestigung eines Flächenelements (12) in einer Aufnahmenut (14), das im Gebrauch das Flächenelement (12) am Randbereich kraftschlüssig umgreift, mit zwei Abschnitten (22, 22b), die im Gebrauch mit den beiden sich gegenüberliegenden Nutwänden (18) der Aufnahmenut (14) zusammenwirken, das Federelement (10, 10a, 10b, 10c, 10d) in der Aufnahmenut (14) zentrieren und über wenigstens einen zum Nutgrund ausrichtbaren Bügel (24) miteinander verbunden sind, wobei an jedem Abschnitt (22, 22b) wenigstens eine Zunge (28, 28a, 28b, 28c, 28d) mit mindestens einem schrägen Teilabschnitt (30) vorgesehen ist, die im Gebrauch das Flächenelement (12) beaufschlagt, wobei die schrägen Teilabschnitte (30) der Zungen (28, 28a, 28b, 28c, 28d) zum wenigstens einen Bügel (24) hin aufeinander zulaufen, **dadurch gekennzeichnet, daß** sich an die schrägen Teilabschnitte (30) der Zungen (28, 28a, 28b, 28c, 28d) Teilabschnitte (32, 32a, 32b, 32c, 32d) anschließen, die im wesentlichen parallel zueinander verlaufen.

2. Federelement (10, 10a, 10b, 10c, 10d) nach Anspruch 1, **dadurch gekennzeichnet, daß** sich an die im wesentlichen parallel verlaufenden Teilabschnitte (32, 32a, 32b, 32c, 32d) der Zungen (28, 28a, 28b, 28c, 28d) schräg voneinander weggerichtete Teilabschnitte (34, 34a, 34d) anschließen.

3. Federelement (10, 10a, 10b, 10c, 10d) nach einem der Ansprüche 1 bis 2, **dadurch gekennzeichnet, daß** der Abstand (a_{Z}) der Zungen (28, 28a, 28b, 28c, 28d) ungefähr ein Drittel bis ein Sechstel des Abstands (a_{A}) der Abschnitte (22, 22b) beträgt.

4. Federelement (10, 10a, 10b, 10c, 10d) nach einem der Ansprüche 1 bis 3, **dadurch gekennzeichnet, daß** mindestens zwei, vorzugsweise drei Bügel (24) vorgesehen sind, zwischen denen die Zungen (28, 28a, 28b, 28c, 28d) angeordnet sind.

5. Federelement (10, 10a, 10b, 10c, 10d) nach einem der Ansprüche 1 bis 4, **dadurch gekennzeichnet, daß** die Abschnitte (22, 22b) an den von den Bügeln (24) abgewandten Bereichen Teilabschnitte (26, 26c) aufweisen, die schräg voneinander weggerichtet sind.

6. Federelement (10, 10a, 10b, 10c, 10d) nach Anspruch 5, **dadurch gekennzeichnet, daß** die Teilabschnitte (26, 26c) in sägezahnförmige Vertiefungen (20) der Nutwände (18) der Aufnahmenut (14) eingreifbar ausgebildet sind.

7. Federelement (10, 10a, 10b, 10c, 10d) nach einem der vorhergehenden Ansprüche, **dadurch gekennzeichnet, daß** die Abschnitte (22, 22b) und die Zungen (28, 28a, 28b, 28c, 28d) des Federelements (10, 10a, 10b, 10c, 10d) im wesentlichen symmetrisch zu einer durch das Federelement (10, 10a, 10b, 10c, 10d) verlaufenden Symmetrieebene (S) ausgebildet sind.

8. Federelement (10, 10a, 10b, 10c, 10d) nach einem der Ansprüche 1 bis 7, **dadurch gekennzeichnet, daß** der oder die Bügel (24) gebogen sind, vorzugsweise eine V-Form haben, die aus dem Federelement (10, 10a, 10c, 10d) heraus- oder in das Federelement (10b) hineinragt.

## Claims

1. Spring element (10, 10a, 10b, 10c, 10d) which is designed as a clamp and is intended for fastening a sheetlike element (12) in a receiving groove (14) which, in use, frictionally engages around the edge region of the sheetlike element (12), having two sections (22, 22b) which, in use, interact with the two opposite groove walls (18) of the receiving groove (14), centre the spring element (10, 10a, 10b, 10c, 10d) in the receiving groove (14) and are connected to each other via at least one clip (24) which can be oriented with respect to the groove base, at least one tongue (28, 28a, 28b, 28c, 28d) having at least one oblique subsection (30) being provided on each section (22, 22b), which tongue, in use, acts upon the sheetlike element (12), the oblique subsections (30) of the tongues (28, 28a, 28b, 28c, 28d) tapering towards each other towards the at least one clip (24), **characterized in that** the oblique subsections (30) of the tongues (28, 28a, 28b, 28c, 28d) are adjoined by subsections (32, 32a, 32b, 32c, 32d) which run essentially parallel to one another.

2. Spring element (10, 10a, 10b, 10c, 10d) according to Claim 1, **characterized in that** those subsections (32, 32a, 32b, 32c, 32d) of the tongues (28, 28a, 28b, 28c, 28d) which run essentially parallel are adjoined by subsections (34, 34a, 34d) directed obliquely away from one another.

3. Spring element (10, 10a, 10b, 10c, 10d) according to either of Claims 1 and 2, **characterized in that** the distance (a_{Z}) of the tongues (28, 28a, 28b, 28c, 28d) is approximately one third to one sixth of the distance (a_{A}) of the sections (22, 22b).

4. Spring element (10, 10a, 10b, 10c, 10d) according to one of Claims 1 to 3, **characterized in that** at least two, preferably three, clips (24) are provided between which the tongues (28, 28a, 28b, 28c, 28d) are arranged.

5. Spring element (10, 10a, 10b, 10c, 10d) according to one of Claims 1 to 4, **characterized in that** the sections (22, 22b) on the regions facing away from the clips (24) have subsections (26, 26c) which are directed obliquely away from each other.

6. Spring element (10, 10a, 10b, 10c, 10d) according to Claim 5, **characterized in that** the subsections (26, 26c) are designed in a manner such that they can engage in sawtooth-shaped depressions (20) of the groove walls (18) of the receiving groove (14).

7. Spring element (10, 10a, 10b, 10c, 10d) according to one of the preceding claims, **characterized in that** the sections (22, 22b) and the tongues (28, 28a, 28b, 28c, 28d) of the spring element (10, 10a, 10b, 10c, 10d) are designed essentially symmetrically to a plane of symmetry (S) running through the spring element (10, 10a, 10b, 10c, 10d).

8. Spring element (10, 10a, 10b, 10c, 10d) according to one of Claims 1 to 7, **characterized in that** the clip or the clips (24) are bent, and preferably have a V-shape projecting from the spring element (10, 10a, 10c, 10d) or into the spring element (10b).

## Revendications

1. Elément élastique (10, 10a, 10b, 10c, 10d) constituant une pince pour fixer un élément plat (12) dans une rainure d'accueil (14) qui entoure en utilisation l'élément plat (12) avec liaison de force sur une zone marginale, cette pince comportant deux sections (22, 22b) qui, en utilisation, coopèrent avec les parois (18) opposés de la rainure d'accueil (14), assurent le centrage de l'élément élastique (10, 10a, 10b, 10c, 10d) dans la rainure d'accueil (14) en étant reliées entre elles par un étrier (24) dirigé vers le fond de la rainure, avec sur chaque section (22, 22b) au moins une languette (28, 28a, 28b, 28c, 28d) présentant au moins une partie (30) en pente qui, en utilisation, agit sur l'élément plat (12), ces parties en pente (30) des languettes (28, 28a, 28b, 28c, 28d) convergeant l'une vers l'autre en direction d'au moins un étrier (24),
**caractérisé en ce qu'**
aux parties en pente (30) des languettes (28, 28a, 28b, 28c, 28d) font suite des parties (32, 32a, 32b, 32c, 32d) essentiellement parallèles entre elles.

2. Elément élastique (10, 10a, 10b, 10c, 10d) selon la revendication 1,
**caractérisé en ce qu'**
aux parties essentiellement parallèles (32, 32a, 32b, 32c, 32d) des languettes (28, 28a, 28b, 28c, 28d) font suite des parties (34, 34a, 34d) obliques divergeant l'une de l'autre.

3. Elément élastique (10, 10a, 10b, 10c, 10d) selon la revendication 1 ou 2,
**caractérisé en ce que**
la distance (a_{Z}) entre les languettes (28, 28a, 28b, 28c, 28d) est à peu près comprise entre 1/3 et 1/6 de la distance (a_{A}) entre les parties (22, 22b).

4. Elément élastique (10, 10a, 10b, 10c, 10d) selon une des revendications 1 à 3,
**caractérisé en ce qu'**
il est prévu au moins deux et de préférence trois étriers (24) entre lesquels se trouvent les languettes (28, 28a, 28b, 28c, 28d).

5. Elément élastique (10, 10a, 10b, 10c, 10d) selon une des revendications 1 à 4,
**caractérisé en ce que**
les sections (22, 22b) présentent sur les zones éloignées des étriers (24), des parties (26, 26c) divergeant obliquement l'une de l'autre.

6. Elément élastique (10, 10a, 10b, 10c, 10d) selon la revendication 5,
**caractérisé en ce que**
les parties (26, 26c) sont configurées de manière à pouvoir venir en prise dans des creux (20) en forme de dents de scie des parois (18) de la rainure d'accueil (14).

7. Elément élastique (10, 10a, 10b, 10c, 10d) selon une des revendications précédentes,
**caractérisé en ce que**
les sections (22, 22b) et les languettes (28, 28a, 28b, 28c, 28d) de l'élément élastique (10, 10a, 10b, 10c, 10d) sont essentiellement symétriques par rapport à un plan de symétrie (S) traversant l'élément élastique (10, 10a, 10b, 10c, 10d).

8. Elément élastique (10, 10a, 10b, 10c, 10d) selon une des revendications précédentes,
**caractérisé en ce que**
le ou les étriers (24) sont recourbés, ils ont de préférence la forme d'un V en saillie vers l'extérieur ou vers l'intérieur de l'élément élastique (10, 10a, 10b, 10c, 10d).
